# EUROPEAN PATENT APPLICATION

(11) **EP 4 675 937 A1**
(43) Date of publication of application: **07.01.2026**
(21) Application number: 24803738.4
(22) Date of filing: 09.05.2024
(51) Int. Cl.: H04B 7/06, H04B 7/0456, H04W 72/1268, H04W 72/232, H04L 5/00, H04L 25/02, H04B 7/0413

(54) **METHOD AND APPARATUS FOR UPLINK SIGNAL TRANSMISSION IN COMMUNICATION SYSTEM**

(30) Priority: 11.05.2023 KR 20230061271; 27.07.2023 KR 20230098165
(71) Applicant: HYUNDAI MOTOR COMPANY, Seoul 06797 (KR); Kia Corporation, Seocho-gu Seoul 06797 (KR)
(72) Inventor: HONG, Ui Hyun, Hwaseong-si, Gyeonggi-do 18280 (KR); LEE, Jeong Su, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2024/006257
(87) International publication number: WO 2024/232685

(57) **Abstract**

A method of a UE according to an embodiment of the present disclosure may comprise the steps of: receiving, from a base station, an upper layer message including SRS transmission-related information; receiving, from the base station, control information including an information element indicating SRS transmission in a STxMP SDM scheme; if SRS needs to be transmitted through a plurality of panels, configuring mapping configuration information indicating mapping between a port for outputting the SRS and an antenna element included in each of the plurality of panels on the basis of the upper layer message and the control information; reporting the mapping configuration information to the base station; and transmitting the SRS to the base station on the basis of the mapping configuration information.

## Description

### [Technical Field]

The present disclosure relates to an enhanced communication technique, and more particularly, to a technique for transmitting uplink signals.

### [Background Art]

A communication network (e.g. 5G communication network or 6G communication network) is being developed to provide enhanced communication services compared to the existing communication networks (e.g. long term evolution (LTE), LTE-Advanced (LTE-A), etc.). The 5G communication network (e.g. New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, since 5G communication and/or 6G communication uses a higher frequency band, a limitation in which cell coverage is reduced may occur. To solve the problem of reduced cell coverage, the 3GPP group, which is conducting standardization for mobile communication, has adopted a beamforming scheme using Transmission and Reception Points (TRPs) and a plurality of antenna elements. In the case of a relatively low frequency band, a transmitter may control beamforming using a digital beamforming scheme so that a beam is formed in a desired direction, and in the case of a high frequency band, the transmitter may control beamforming so that a beam is formed in a desired direction by using an analog beamforming scheme or by using both a digital beamforming scheme and an analog beamforming scheme together.

The beamforming scheme may be used not only for downlink (DL) transmission from a base station and/or a TRP to a user equipment (UE) but also for uplink (UL) transmission from the UE to the base station and/or the TRP. Therefore, a method and an apparatus for the UE to transmit a signal through the UL are required.

### [Disclosure]

### [Technical Problem]

The present disclosure is directed to providing a method and an apparatus for transmitting uplink signals in a communication system.

### [Technical Solution]

A method of a user equipment (UE) for achieving the above-described objective may comprise: receiving, from a base station, a higher layer message including transmission-related information of a sounding reference signal (SRS); receiving, from the base station, control information including an information element indicating transmission of the SRS in a simultaneous transmission across multi-panel (STxMP) spatial division multiplexing (SDM) scheme; based on the SRS being transmitted via a plurality of panels, configuring mapping configuration information indicating a mapping between ports outputting the SRS and antenna elements included in each of the plurality of panels based on the higher layer message and the control information; reporting the mapping configuration information to the base station; and transmitting the SRS to the base station based on the mapping configuration information.

The mapping configuration information may include a number of SRS resource sets of the SRS transmitted to the base station and information on a mapping between the ports outputting the SRS and the antenna elements of the panels.

The higher layer message may include at least one of: information on resource sets of the SRS, information indicating whether asymmetric transmission of the SRS is allowed, or information on guard symbols.

When the higher layer message allows asymmetric transmission of the SRS and a number of ports for transmitting the SRS divided by a number of the plurality of panels is not an integer, the configuring of the mapping configuration information may comprise:
mapping the ports to antenna elements of the panels, respectively, so that the number of ports outputting the SRS is same for each panel; and sequentially mapping remaining ports after the mapping to the panels based on panel index priorities.

A number of SRS resource sets transmitted via each of the plurality of panels may be same per panel.

The method may further comprise: based on the control information indicating switching of SRS transmission from a single transmission and reception point (sTRP) scheme to the STxMP SDM scheme, stopping transmission of the SRS during guard symbols based on information on the guard symbols included in the higher layer message.

The method may further comprise: based on the control information indicating switching of SRS transmission from an sTRP scheme to the STxMP SDM scheme, and the higher layer message not including information on guard symbols, stopping signal transmission in at least one resource set among SRS resource sets of the SRS, that is scheduled for transmission during a switching time of the ports.

In the configuring of the mapping configuration information, different ports may be allocated to even-numbered panels and odd-numbered panels.

When a number of antenna ports used for transmission in the STxMP SDM scheme differs from a number of antenna ports used for sTRP transmission, codebooks used for the STxMP SDM scheme and codebooks used for the sTRP transmission may be separately defined.

A method of a base station, according to exemplary embodiments of the present disclosure, may comprise: transmitting, to a user equipment (UE), a higher layer message including transmission-related information of a sounding reference signal (SRS); transmitting, to the UE, control information including an information element indicating transmission of the SRS in a simultaneous transmission across multi-panel (STxMP) spatial division multiplexing (SDM) scheme; receiving, from the UE, mapping configuration information indicating a mapping between ports outputting the SRS to be transmitted via a plurality of panels and antenna elements included in each of the plurality of panels; and estimating a channel through the SRS received from the UE based on the mapping configuration information.

The method may further comprise: transmitting, to the UE, a UE capability information enquiry message; receiving, from the UE, UE capability information in response to the UE capability information enquiry message; and configuring the transmission-related information of the SRS based on the UE capability information.

The mapping configuration information may include a number of SRS resource sets transmitted to the base station and information on a mapping between the ports outputting the SRS and the antenna elements of the panels.

The higher layer message may include at least one of: information on resource sets of the SRS, information indicating whether asymmetric transmission of the SRS is allowed, or information on guard symbol(s).

A user equipment (UE), according to exemplary embodiments of the present disclosure, may comprise at least one processor, wherein the at least one processor may cause the UE to perform:
receiving, from a base station, a higher layer message including transmission-related information of a sounding reference signal (SRS); receiving, from the base station, control information including an information element indicating transmission of the SRS in a simultaneous transmission across multi-panel (STxMP) spatial division multiplexing (SDM) scheme; based on the SRS being transmitted via a plurality of panels, configuring mapping configuration information indicating a mapping between ports outputting the SRS and antenna elements included in each of the plurality of panels based on the higher layer message and the control information; reporting the mapping configuration information to the base station; and transmitting the SRS to the base station based on the mapping configuration information.

The mapping configuration information may include a number of SRS resource sets of the SRS transmitted to the base station and information on a mapping between the ports outputting the SRS and the antenna elements of the panels.

The higher layer message may include at least one of: information on resource sets of the SRS, information indicating whether asymmetric transmission of the SRS is allowed, or information on guard symbols.

The at least one processor may further cause the UE to perform,
when the higher layer message allows asymmetric transmission of the SRS and a number of ports for transmitting the SRS divided by a number of the plurality of panels is not an integer, in the configuring of the mapping configuration information, mapping the ports to antenna elements of the panels, respectively, so that the number of ports outputting the SRS is same for each panel; and sequentially mapping remaining ports after the mapping to the panels based on panel index priorities.

A number of SRS resource sets transmitted via each of the plurality of panels may be same per panel.

The at least one processor may further cause the UE to perform:
based on the control information indicating switching of SRS transmission from a single transmission and reception point (sTRP) scheme to the STxMP SDM scheme, stopping transmission of the SRS during guard symbols based on information on the guard symbols included in the higher layer message.

The at least one processor may further cause the UE to perform:
based on the control information indicating switching of SRS transmission from an sTRP scheme to the STxMP SDM scheme, and the higher layer message not including information on guard symbols, stopping signal transmission in at least one resource set among SRS resource sets of the SRS, that is scheduled for transmission during a switching time of the ports.

### [Advantageous Effects]

According to the present disclosure, when dynamic switching is performed between Simultaneous Transmission across Multi-Panel (STxMP) spatial division multiplexing (SDM) transmission and sTRP transmission, rules for mapping between antenna ports of panels (or digital ports for SRS transmission) can be provided when a UE has a plurality of panels. Through this, when a UE having multiple panels performs dynamic switching between STxMP SDM transmission and sTRP transmission, it is possible to identify through which port of which panel an SRS is transmitted. Furthermore, since it is possible to know the panels and ports through which an SRS is transmitted in STxMP SDM transmission, there is an advantage that a base station can more accurately estimate a channel for setting a transmit precoding matrix indicator (TPMI).

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a block diagram illustrating a first exemplary embodiment of communication nodes performing communication.
FIG. 4A is a block diagram illustrating a first exemplary embodiment of a transmission path.
FIG. 4B is a block diagram illustrating a first exemplary embodiment of a reception path.
FIG. 5 is a conceptual diagram illustrating a first exemplary embodiment of a system frame in a communication system.
FIG. 6 is a conceptual diagram illustrating a first exemplary embodiment of a subframe in a communication system.
FIG. 7 is a conceptual diagram illustrating a first exemplary embodiment of a slot in a communication system.
FIG. 8 is a conceptual diagram illustrating a first exemplary embodiment of a time-frequency resource in a communication system.
FIG. 9A is a conceptual diagram illustrating a case where a UE having two panels with unshared digital ports transmits a signal to sTRP.
FIG. 9B is a conceptual diagram illustrating a case where a UE having two panels with unshared digital ports transmits a signal using an SDM scheme.
FIG. 10A is a conceptual diagram illustrating a case where a UE having two panels with shared digital ports transmits a signal to sTRP.
FIG. 10B is a conceptual diagram illustrating a case where a UE having two panels with shared digital ports transmits a signal using an SDM scheme.
FIG. 11A is a conceptual diagram illustrating a first exemplary embodiment in which a UE having two panels with shared digital ports transmits a signal using an SDM scheme with different numbers of SRS resource sets used per panel.
FIG. 11B is a conceptual diagram illustrating a second exemplary embodiment in which a UE having two panels with shared digital ports transmits a signal using an SDM scheme with different numbers of SRS resource sets used per panel.
FIG. 12 is a sequence chart for describing a case in which configuration information is provided from a network to a UE having a plurality of panels with shared digital ports and SRS transmission is performed.

### [Best mode of the Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g. transmission or reception of a signal) to be performed at a first communication node among communication nodes is described in exemplary embodiments, a corresponding second communication node may perform a method (e.g. reception or transmission of the signal) corresponding to the method performed at the first communication node. That is, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or sidelink control information (SCI)).

In the present disclosure, 'configuration of an operation (e.g. transmission operation)' may refer to signaling of configuration information (e.g. information elements, parameters) required for the operation and/or information indicating to perform the operation. 'configuration of information elements (e.g. parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g. 4G communication networks, 5G communication networks, and/or 6G communication networks). Here, 'communication network' may be used interchangeably with a term 'communication system'.

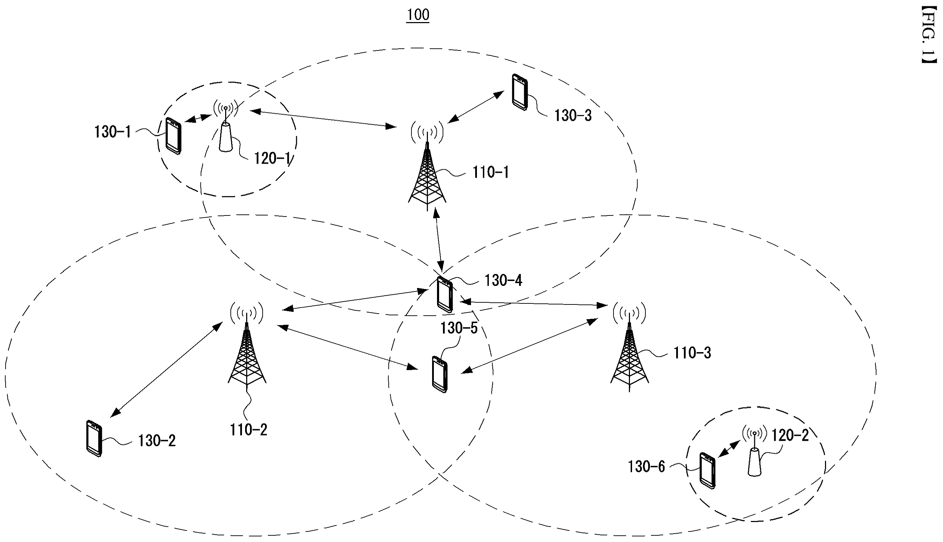

FIG. 1 is a conceptual diagram illustrating a first exemplary embodiment of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g. a serving gateway (S-GW), a packet data network (PDN) gateway (P-GW), a mobility management entity (MME). When the communication system 100 is a 5G communication (e.g. NR system), the core network may include an access and mobility management function (AMF), a user plane function (UPF), a session management function (SMF), and the like.

The plurality of communication nodes 110 to 130 may support communication protocols (e.g. LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

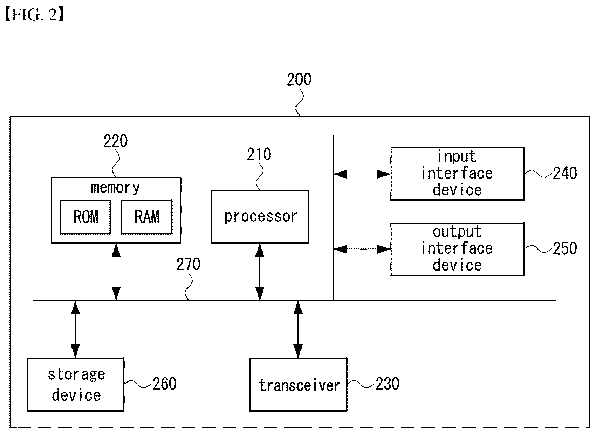

FIG. 2 is a block diagram illustrating a first exemplary embodiment of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a nonvolatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g. a single-user MIMO (SU-MIMO), multi-user MIMO (MU-MIMO), massive MIMO, or the like), coordinated multipoint (CoMP) transmission, carrier aggregation (CA) transmission, transmission in an unlicensed band, sidelink communication (e.g. device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

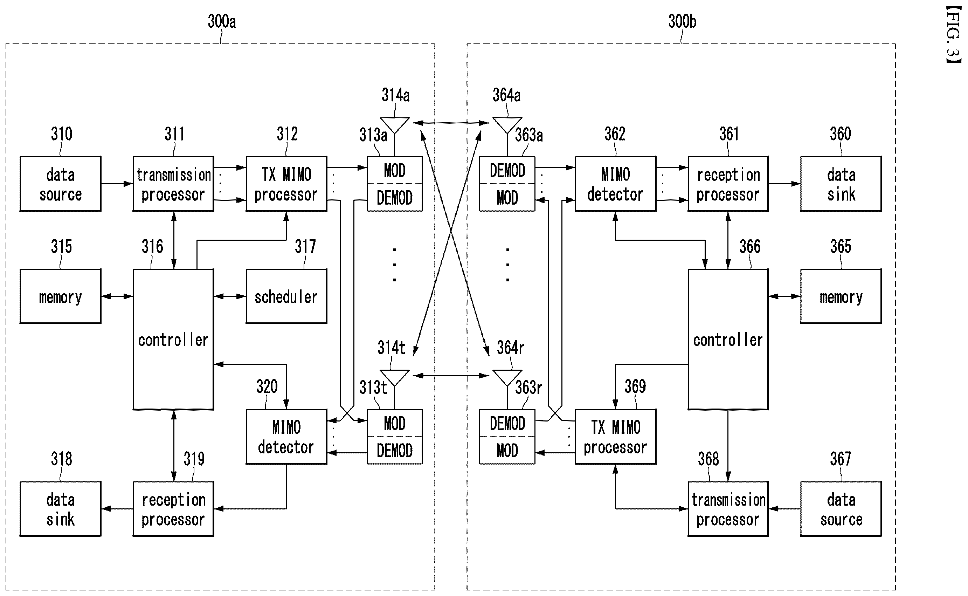

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating a first exemplary embodiment of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g. data unit) from a data source 310. The transmission processor 311 may receive control information from a controller 316. The control information may include at least one of system information, RRC configuration information (e.g. information configured by RRC signaling), MAC control information (e.g. MAC CE), or PHY control information (e.g. DCI, SCI).

The transmission processor 311 may generate data symbol(s) by performing processing operations (e.g. encoding operation, symbol mapping operation, etc.) on the data. The transmission processor 311 may generate control symbol(s) by performing processing operations (e.g. encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g. precoding operations) on the data symbol(s), control symbol(s), and/or synchronization/reference symbol(s). An output (e.g. symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g. de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g. data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g. precoding operations) on the data symbol(s), control symbol(s), and/or reference symbol(s). An output (e.g. symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g. de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

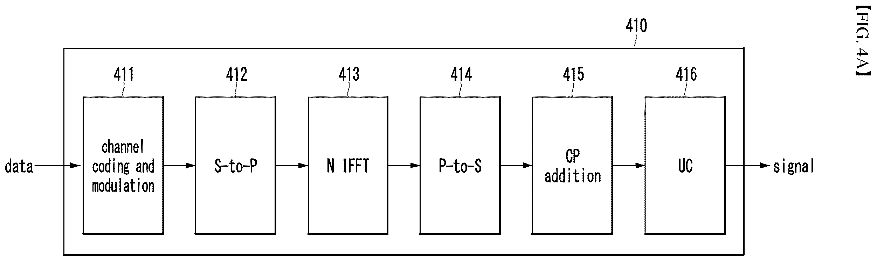

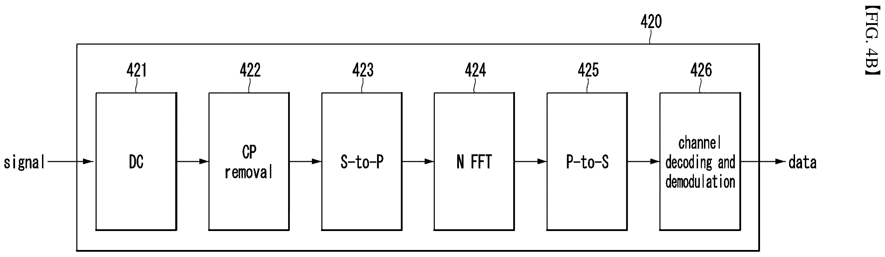

FIG. 4A is a block diagram illustrating a first exemplary embodiment of a transmission path, and FIG. 4B is a block diagram illustrating a first exemplary embodiment of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g. components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

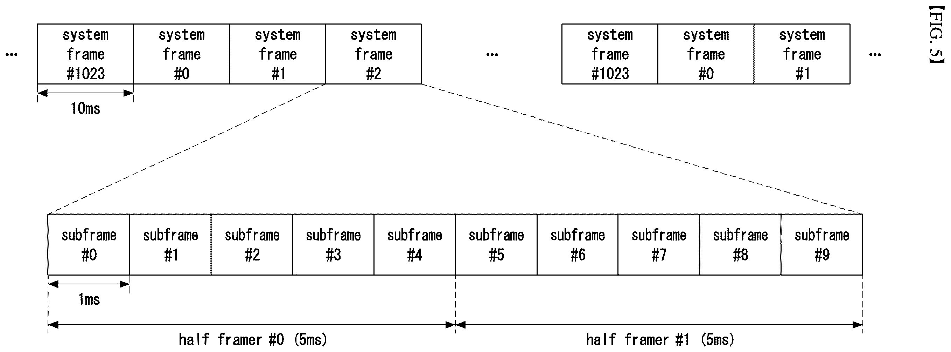

FIG. 5 is a conceptual diagram illustrating a first exemplary embodiment of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

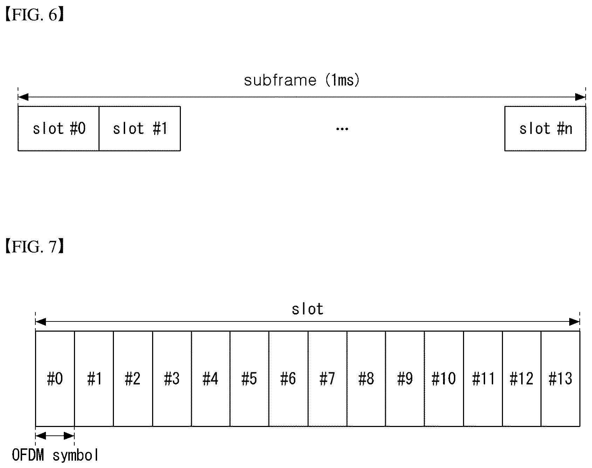

FIG. 6 is a conceptual diagram illustrating a first exemplary embodiment of a subframe in a communication system.

As shown in FIG. 6, one subframe may include n slots, and n may be a natural number. Accordingly, one subframe may consist of one or more slots.

FIG. 7 is a conceptual diagram illustrating a first exemplary embodiment of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g. µ = 0), the length of slot may be 1 ms. In this case, one system frame may include 10 slots. When a subcarrier spacing is 30 kHz (e.g. µ = 1), the length of slot may be 0.5 ms. In this case, one system frame may include 20 slots.

When a subcarrier spacing is 60 kHz (e.g. µ = 2), the length of slot may be 0.25 ms. In this case, one system frame may include 40 slots. When a subcarrier spacing is 120 kHz (e.g. µ = 3), the length of slot may be 0.125 ms. In this case, one system frame may include 80 slots. When a subcarrier spacing is 240 kHz (e.g. µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g. RRC signaling). Information indicating a semi-static slot format may be included in system information, and the semi-static slot format may be configured cell-specifically. Additionally, a semi-static slot format may be further configured for each terminal through terminal-specific higher-layer signaling (e.g. RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g. slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

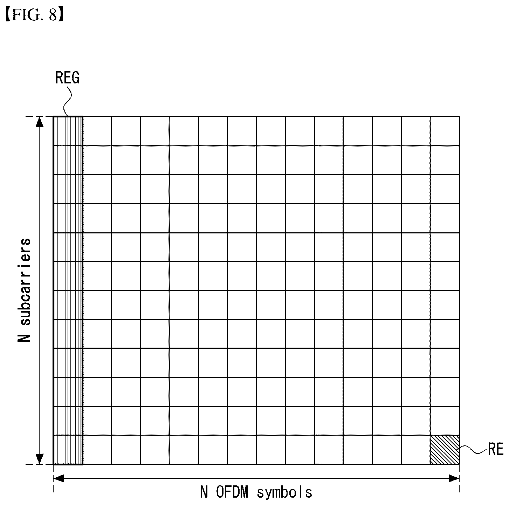

FIG. 8 is a conceptual diagram illustrating a first exemplary embodiment of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g. a common RB grid) based on a reference frequency (e.g. point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g. scheduling information) of the PDSCH to a terminal through a PDCCH. The terminal may obtain the configuration information of the PDSCH by receiving the PDCCH (e.g. Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g. DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g. Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g. in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, in the 3GPP standard meetings, 5G is also referred to as a new radio (NR), and the standardization of Rel-17 specifications and Rel-18 specifications is in progress. According to a work item description (WID) for Rel-18 multiple-input multiple-output (MIMO) evolution, improvements to the definitions of Rel-17 are presented. For example, the Rel-18 MIMO evolution WID focuses on multi-TRP (mTRP) use cases by utilizing a unified transmission configuration indication (TCI) framework defined in Rel-17. In particular, it is presented that the extension of the Rel-17 unified TCI framework for indicating multiple downlink (DL) and uplink (UL) TCI states needs to be supported. According to the NR specifications, in the current UL, up to two TRPs and up to two panels are assumed. A UE needs to perform simultaneous transmission using multiple panels for higher UL throughput/reliability. The UL transmission of the UE may be performed according to an indication in downlink control information (DCI) received from a base station and/or a TRP. The base station and/or the TRP may instruct the UE to perform UL transmission using a single DCI or multiple DCIs.

In the 3GPP standard meetings RAN1 #111 and RAN1 #112, many issues were discussed regarding dynamic switching between an sTRP scheme and a spatial division multiplexing (SDM) scheme for PUSCH transmission among single SCI-based simultaneous multi-panel UL transmission schemes. For example, regarding dynamic switching between a simultaneous transmission across multi-panel (STxMP) SDM scheme and sTRP transmission, discussions were held on the maximum number of layers for sTRP transmission and determination of the maximum number of layers in SDM transmission. As a result of the discussion, for sTRP transmission, as in the operation before Rel-18, it was agreed that when a UE performs UL transmission, the maximum number of layers is configured as *maxRank* (or *Lmax).* For the SDM scheme, it was agreed that when a UE performs UL transmission, the maximum number of layers is configured for each of the first and second SRS resource sets.

However, it was not agreed whether the number of antenna ports used for PUSCH transmission in the SDM scheme and sTRP scheme should be the same. In this case, it is necessary to consider a case in which digital ports are shared or separated between panels.

Hereinafter, the present disclosure describes a method of determining the number of antenna ports used for PUSCH transmission in the SDM scheme and sTRP scheme, considering whether digital ports are shared between panels.

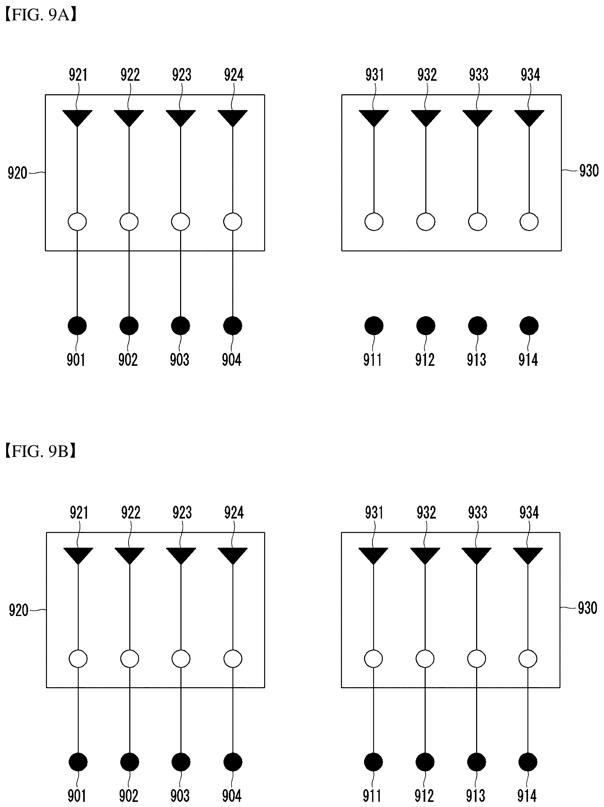

FIG. 9A is a conceptual diagram illustrating a case where a UE having two panels with unshared digital ports transmits a signal to sTRP, and FIG. 9B is a conceptual diagram illustrating a case where a UE having two panels with unshared digital ports transmits a signal using an SDM scheme.

The configurations of FIG. 9A and FIG. 9B may be a part of the configuration of the transceiver 230 described in FIG. 2, and may be a part of the configuration illustrating the connection between modulators (MODs) of the transceivers 313a through 313t and antennas 314a through 314t described in FIG. 3. Compared with the configuration of FIG. 3, the configuration of FIG. 9A is described as follows.

Referring to FIG. 9A, digital ports 901, 902, 903, 904, 911, 912, 913, and 914 may be included in the MODs of the transceivers 313a through 313t for transmitting a signal intended by the UE. In other words, the digital ports 901-904 and 911-914 may be output ports of the MODs. In addition, antennas 921, 922, 923, 924, 931, 932, 933, and 934 may correspond to the antennas 314a through 314t illustrated in FIG. 3. The example of FIG. 9A corresponds to a case in which the UE has two panels 920 and 930, and the antennas 314a through 314t illustrated in FIG. 3 are arranged in the respective panels 920 and 930.

The antennas arranged in the respective panels 920 and 930 may have a cross-polarized (X-POL) structure. If the antennas of each of the panels 920 and 930 have the X-POL structure, each of the antennas 921-924 and 931-934 illustrated in FIG. 9A may correspond to a pair of antenna elements in the X-POL structure. In the case where each of the antennas 921-924 and 931-934 illustrated in FIG. 9A corresponds to a pair of antenna elements, the actual antenna elements for each panel may be configured as eight antenna elements.

In another example, if the antennas 921-924 and 931-934 of the respective panels 920 and 930 have the X-POL structure, the antennas 921-924 and 931-934 illustrated in FIG. 9A may respectively correspond to an antenna element having the X-POL structure. For example, the first panel 920 may have two X-POL antennas, and the second panel 930 may have two X-POL antennas. In the following description, it is assumed that each of the antennas 921-924 and 931-934 included in the panels 920 and 930 corresponds to a pair of antenna elements having the X-POL structure.

In addition, in the example of FIG. 9A, the illustration of four antennas 921-924 or 931-934 in each of the panels 920 and 930 is merely one example for convenience of description, and it should be noted that the number of antennas included in each of the panels 920 and 930 is not limited to four. In other words, the number of antennas may be configured as three or fewer, or five or more.

Each of the digital ports 901-904 and 911-914 is, as described above, a port from which a signal to be transmitted by the UE is output, and data and/or signals transmitted in the uplink (UL) may be output therefrom. For example, each of the digital ports 901-904 and 911-914 may output uplink data transmitted through a physical uplink shared channel (PUSCH), control information transmitted through a physical uplink control channel (PUCCH), and signals such as a sounding reference signal (SRS).

The example of FIG. 9A may correspond to a case where the digital ports 901-904 and 911-914 are separately connected to the respective panels 920 and 930. In other words, the first digital port 901, the second digital port 902, the third digital port 903, and the fourth digital port 904 may be connected to the first panel 920, and the fifth digital port 911, the sixth digital port 912, the seventh digital port 913, and the eighth digital port 914 may be connected to the second panel 930. As described above, the digital ports 901-904 connected to the first panel 920 and the digital ports 911-914 connected to the second panel 930 may be distinguished in advance. This case, in which the digital ports are distinguished in advance by panel, is hereinafter referred to as a case where digital ports are unshared.

In addition, each of the panels 920 and 930 may transmit a signal and/or a channel to a base station and/or a TRP. The UE may select one panel or both panels to transmit a signal and/or a channel to the TRP. FIG. 9A may correspond to an example in which the UE transmits a signal and/or a channel to sTRP through one panel.

As illustrated in FIG. 9A, when the UE selects the first panel 920, the signal and/or channel output from the digital ports 901-904 connected to the first panel 920 may be transmitted to the TRP through the antennas 921-924 of the first panel 920. For example, when the UE transmits an SRS to one TRP (sTRP), the UE may transmit an SRS output from the digital ports 901-904 connected to the first panel 920 to sTRP. In this case, the second panel 930 may not be used for signal transmission. In FIG. 9A, in order to indicate that the second panel 930 is not used for signal transmission, a state in which a connection between the digital ports 911-914 connected to the second panel 930 is absent is illustrated.

Referring to FIG. 9B, the same reference numerals are used for the same configuration as described in FIG. 9A. Therefore, each of the first panel 920 and the second panel 930 may have four antennas 921-924 or 931-934. The digital ports 901-904 and 911-914 may be ports from which a signal and/or data is output. As in FIG. 9A, the digital ports 901-904 connected to the first panel 920 and the digital ports 911-914 connected to the second panel 930 may correspond to a case where the digital ports are distinguished in advance by panel. In other words, the digital ports may be unshared.

When selecting panel(s) to be used for uplink transmission, the UE may decide to use both the first panel 920 and the second panel 930. When it is determined to use both the first panel 920 and the second panel 930, signals output from the digital ports 901-904 may be transmitted to a TRP through the antennas 921-924 of the first panel 920, and signals output from the digital ports 911-914 may be transmitted to the TRP through the antennas 931-934 of the second panel 930. In other words, the UE may transmit signals to the TRP using both the first panel 920 and the second panel 930. When using two different panels together, the UE may transmit signals to the TRP using the SDM scheme.

Meanwhile, in the examples of FIGS. 9A and 9B, the number of digital ports per panel is illustrated as four for convenience of understanding, and the number of digital ports may be configured as three or fewer, or five or more.

Through the examples of FIG. 9A and FIG. 9B described above, sTRP transmission and SDM transmission with unshared digital ports have been described. In other words, FIG. 9A and FIG. 9B may correspond to cases in which the UE transmits a signal and/or data when digital ports are configured separately by antenna panel.

Meanwhile, the number of antenna ports used in the following description may correspond to the number of digital ports. In other words, in the example of FIG. 9A, the number of antenna ports used is four, which is the same as the number of digital ports through which the SRS is transmitted. In addition, in the example of FIG. 9B, the number of antenna ports used is eight, which is the same as the number of digital ports through which the SRS is transmitted. Therefore, unless otherwise specifically described in the following description, the number of antenna ports used may be understood as the number of digital ports.

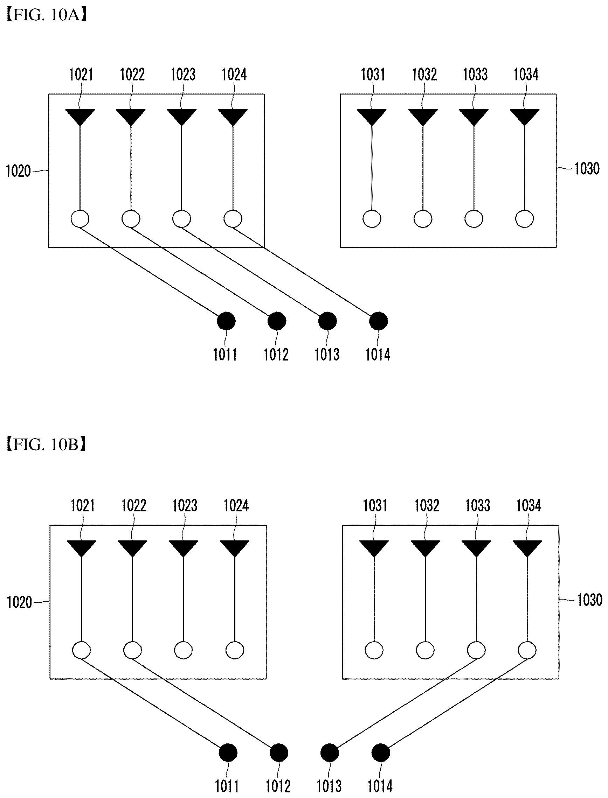

FIG. 10A is a conceptual diagram illustrating a case where a UE having two panels with shared digital ports transmits a signal to sTRP, and FIG. 10B is a conceptual diagram illustrating a case where a UE having two panels with shared digital ports transmits a signal using an SDM scheme.

In FIG. 10A, digital ports 1011, 1012, 1013, and 1014 may be included in the MODs of the transceivers 313a through 313t for transmitting a signal intended by the UE. In other words, the digital ports 1011-1014 may be output ports of the MODs illustrated in FIG. 3.

Antennas 1021, 1022, 1023, 1024, 1031, 1032, 1033, and 1034 may correspond to the antennas 314a through 314t illustrated in FIG. 3. The example of FIG. 10A corresponds to a case in which the UE has two panels 1020 and 1030, and the antennas 314a through 314t illustrated in FIG. 3 are arranged in the respective panels 1020 and 1030. In addition, each of the antennas of the respective panels 1020 and 1030 may have an X-POL structure. In the example of FIG. 10A, it is also assumed that each of the antennas 1021-1024 and 1031-1034 included in the panels 1020 and 1030 correspond to a pair of antenna elements in the X-POL structure.

Referring to FIG. 10A, the four digital ports 1011-1014 may all be connected to the first panel 1020, or all be connected to the second panel 1030, or be divided and connected to the first panel 1020 and the second panel 1030. Therefore, the UE may determine panel(s) for transmitting a signal and/or channel. For example, the UE may decide to transmit the signal using only one panel or may decide to transmit the signal using two or more panels. The example of FIG. 10A may correspond to a case in which the UE determines one panel for signal transmission. When the UE determines to use one panel for signal transmission, the UE may select one of the first panel 1020 or the second panel 1030, and the example of FIG. 10A illustrates a case in which the UE selects the first panel 1020. According to the example of FIG. 10A, the four digital ports 1011-1014 for outputting a signal to be transmitted may all be connected to the first panel 1020. Although not illustrated in the drawing, the UE may select the second panel 1030 for signal transmission. If the second panel 1030 is selected, the digital ports 1011-1014 may all be connected to the second panel 1030.

Meanwhile, the UE may select both two panels 1020 and 1030 for signal transmission. When the UE selects both two panels 1020 and 1030, the four digital ports 1011-1014 outputting signals may be mapped to the panels as illustrated in FIG. 10B. For example, the first digital port 1011 and the second digital port 1012 may be mapped to be connected to the first antenna 1021 of the first panel 1020 and the second antenna 1022 of the first panel 1020. In addition, the third digital port 1013 and the fourth digital port 1014 may be mapped to be connected to the third antenna 1033 of the second panel 1030 and the fourth antenna 1034 of the second panel 1030. The above mapping is merely an example, and the mapping method may be configured differently. As another example of mapping, the first digital port 1011 and the second digital port 1012 may be mapped to be connected to the first antenna 1031 of the second panel 1030 and the second antenna 1032 of the first panel 1020, respectively. In addition, the third digital port 1013 and the fourth digital port 1014 may be mapped to be connected to the third antenna 1023 of the first panel 1030 and the fourth antenna 1024 of the first panel 1030, respectively.

The UE may transmit output signals of the four digital ports 1011-1014 through two panels 1020 and 1030 using the SDM scheme. The above-described case in which four digital ports are shared between two panels may be referred to as a case in which digital ports are shared.

As in FIG. 9A and FIG. 9B, when digital ports are unshared, the digital ports 901-904 or 911-914 connected to the selected panel may all be used for sTRP transmission. In addition, in the case of FIG. 10A, although digital ports may be sharable, the output of all digital ports may be transmitted through one selected panel. Therefore, the case of FIG. 10A may be understood as similar to or the same as the case of unshared digital ports.

In the case of FIG. 10B, where signals are transmitted using the SDM scheme, four digital ports may be shared between two transmission panels. Accordingly, as described above, the digital ports respectively mapped to the panels 1020 and 1030 cannot be configured in such a way that all digital ports are used for one panel. Instead, only certain predefined subsets of the digital ports may be allocated to a given panel. The mapping relationship between the digital ports and the panels illustrated in FIG. 10B may be an example of such a subset configuration.

In general, when the UE transmits data on a PUSCH, the data to be transmitted may be precoded by a precoder. Precoding on the data to be transmitted may be performed based on parameters determined by a transmit precoding matrix indicator (TPMI) included in DCI received from a base station and/or a TRP.

The procedure for determining precoding of data to be transmitted by the UE is described in more detail below. The UE in a radio resource control (RRC) connected state may transmit UE capability information to the base station and/or the TRP in response to a UE capability enquiry received from the base station and/or the TRP. The UE capability information may include various information such as information on frequency bands available to the UE, the number of antenna ports of the UE, and precoders available for use.

When transmitting DCI instructing uplink transmission to the UE based on the received UE capability information, the base station may configure precoding parameters in a TPMI field of the DCI and transmit the DCI. The UE may determine a TPMI index of a TPMI table based on the parameters configured in the TPMI field included in the received DCI and other information included in the DCI, for example, the number of ports of an SRS resource. A precoder corresponding to the determined TPMI index may indicate a precoder for precoding the data to be transmitted by the UE in the uplink. Therefore, the UE may transmit the data (or signal) in the uplink using the determined precoder. As described above, in the case of sTRP transmission, the UE may determine a precoder regardless of whether digital ports are shared. Thereafter, the UE may transmit a channel (or signal) to sTRP in the uplink using the determined precoder.

On the other hand, a base station may instruct a UE to perform transmission using the SDM scheme. When the UE transmits a signal in the uplink using the SDM scheme with unshared digital ports, the maximum number of layers of an SDM PUSCH may be twice that of a PUSCH for sTRP transmission. When digital ports are unshared and the UE performs uplink transmission using the SDM scheme, the number of SRS ports per layer is the same as in sTRP transmission. Therefore, when digital ports are unshared, the UE may transmit data (or signal) for each layer in the uplink channel in the same manner as in sTRP transmission.

In contrast, when digital ports are shared between panels in the SDM scheme, the number of SRS ports per panel decreases compared to the uplink transmission to sTRP or the SDM scheme with unshared digital ports. However, in the current specifications, there is no definition for a method of configuring the number of SRS ports per panel in the case where digital ports are shared between panels in the SDM scheme. Therefore, in the SDM scheme where digital ports are shared between panels, a method of configuring the number of SRS ports per panel is required.

In other words, in the cases of sTRP transmission with shared or unshared digital ports and in the case of SDM scheme with unshared digital ports, the number of SRS ports may be determined in the manner described above. In contrast, in the case of SDM scheme with shared digital ports, the UE needs to report to the base station information on a number of (maximum) SRS resource sets that can be transmitted in the uplink through the panels and/or information on which digital ports of which panel the respective SRS resource sets are transmitted in the uplink.

The base station (e.g. gNB) may identify the SRS ports available for SDM transmission based on the information reported by the UE, and may estimate an uplink channel through which data (or signal) is transmitted from the UE based on the identified SRS ports. The base station may set an appropriate TPMI value for each panel based on the result of estimation of the uplink channel. In other words, when digital ports are shared between the panels in the SDM scheme, the UE needs to configure information on how many SRS resource sets are used in each panel and report the information to the base station.

The case in which the UE performs uplink transmission using the sTRP scheme and the case in which the UE performs uplink transmission using the SDM scheme are reconsidered with reference to FIG. 10A and FIG. 10B.

In the examples of FIG. 10A and FIG. 10B, the UE may be configured with up to four SRS resource sets. In this case, in the case of uplink transmission using the sTRP scheme, all four SRS resource sets may be transmitted through one panel. In other words, the UE may transmit four SRS resource sets to sTRP through the first panel 1020, or the UE may transmit four SRS resource sets to sTRP through the second panel 1030. The example of FIG. 10A illustrates a case in which SRS resource sets are transmitted through the first panel 1020.

In contrast, in the case of SDM transmission, some of up to four SRS resource sets may be transmitted through the first panel 1020, and the remaining SRS resource sets may be transmitted through the second panel 1030. According to the example of FIG. 10B, the first digital port 1011 and the second digital port 1012 allow the SRS to be transmitted through the first antenna 1021 and the second antenna 1022 of the first panel 1020, and the remaining two digital ports, the third digital port 1013 and the fourth digital port 1014, allow the SRS to be transmitted through the third antenna 1033 and the fourth antenna 1034 of the second panel 1030.

Therefore, when the base station sets a TPMI for the first panel 1020, the base station needs to set the TPMI based on measurement of the first antenna 1021 of the first panel 1020 and the second antenna 1022 of the first panel 1020 through which the SRS is transmitted. In addition, when the base station sets a TPMI for the second panel 1030, the base station needs to set the TPMI based on measurement of the third antenna 1033 of the second panel 1030 and the fourth antenna 1034 of the second panel 1030 through which the SRS is transmitted.

When digital ports are shared between the panels 1020 and 1030 in the SDM scheme as described above, the UE needs to inform the base station of the number of SRS resource sets and the SRS ports used for each panel.

According to an exemplary embodiment, in the SDM scheme in which digital ports are shared, the SRS resource sets may be configured as a predetermined ratio of the SRS resource sets used in sTRP transmission, for example, 1/N. Here, N represents the number of panels. In this case, it may be considered that the same number of SRS resource sets is used for each panel.

If the number of SRS resource sets used in the SDM scheme with shared digital ports is set differently for each panel, the UE may need to inform the base station of the number of SRS resource sets used per panel. Here, information for notifying the SRS resource sets used per panel in the SDM scheme with shared digital ports may be, for example, 2-bit indicator information or 4-bit indicator information.

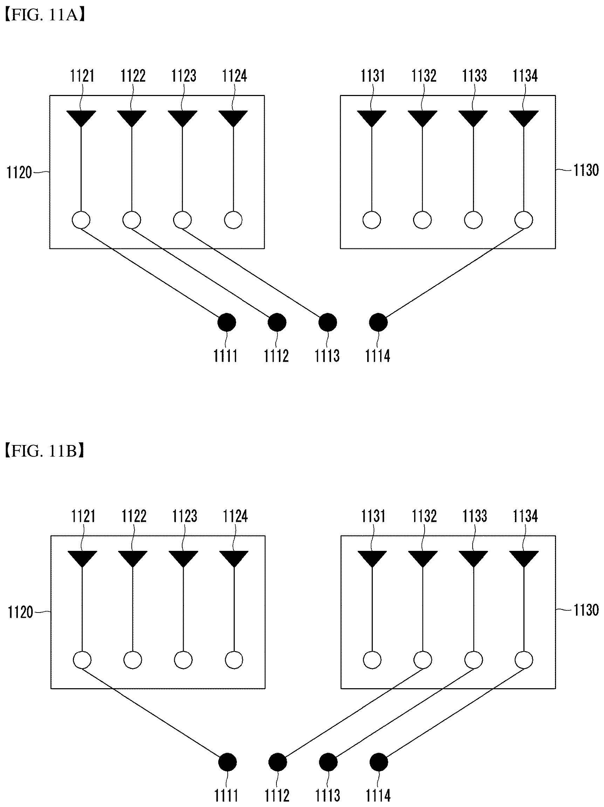

FIG. 11A is a conceptual diagram illustrating a first exemplary embodiment in which a UE having two panels with shared digital ports transmits a signal using an SDM scheme with different numbers of SRS resource sets used per panel, and FIG. 11B is a conceptual diagram illustrating a second exemplary embodiment in which a UE having two panels with shared digital ports transmits a signal using an SDM scheme with different numbers of SRS resource sets used per panel.

In FIG. 11A, digital ports 1111, 1112, 1113, and 1114 may be included in the MODs of the transceivers 313a through 313t for transmitting a signal intended by the UE. In other words, the digital ports 1111-1114 may be output ports of the MODs illustrated in FIG. 3.

Antennas 1121, 1122, 1123, 1124, 1131, 1132, 1133, and 1134 may correspond to the antennas 314a through 314t illustrated in FIG. 3. The example of FIG. 11A corresponds to a case in which the UE has two panels 1120 and 1130 and the antennas 314a through 314t illustrated in FIG. 3 are arranged in the respective panels 1120 and 1130. In addition, each of the antennas of the respective panels 1120 and 1130 may have an X-POL structure. The example of FIG. 11A is described on the assumption that each of the antennas 1121-1124 and 1131-1134 included in the panels 1120 and 1130 correspond to a pair of antenna elements in the X-POL structure.

Referring to FIG. 11A, among the four digital ports 1111-1114, the first digital port 1111, the second digital port 1112, and the third digital port 1113 are connected to the first antenna 1121, the second antenna 1122, and the third antenna 1123 of the first panel 1120, respectively, and the fourth digital port 1114 among the four digital ports 1111-1114 is connected to the fourth antenna 1134 of the second panel 1130.

FIG. 11B has the same configuration as FIG. 11A, except that only the connection between digital ports and panel antennas is different. Referring to FIG. 11B, among the four digital ports 1111-1114, the first digital port 1111 is connected to the first antenna 1121 of the first panel 1120, and the second digital port 1112, the third digital port 1113, and the fourth digital port 1114 among the four digital ports 1111-1114 are connected to the second antenna 1132, the third antenna 1133, and the fourth antenna 1134 of the second panel 1130, respectively.

As illustrated in FIGS. 11A and 11B, when digital ports are connected or configured to be connected to the respective antenna panels in different numbers, the base station can accurately estimate the uplink channel in determining a TPMI of the UE only if the UE informs the base station of the ports used for uplink signal transmission, for example, information on SRS transmission ports.

Therefore, in the present disclosure, when a UE having two panels with shared digital ports transmits a signal using the SDM scheme, information on connections between digital ports and panels (or mapping configuration information between digital ports and panels) may be defined in the following manner. For example, assuming that the maximum number of digital ports available to the UE is four and the number of panels available is two, information may be configured to identify which panel each of the first digital port 1111, the second digital port 1112, the third digital port 1113, and the fourth digital port 1114 is connected (or configured to be connected) to. Assuming that '0' indicates the first panel 1120 and '1' indicates the second panel1130, in the case of FIG. 11A, the value may be '0001', and in the case of FIG. 11B, the value may be '0111'.

In the case of identifying connections between digital ports and panels in the manner described above, four bits may be required. In general, in a wireless communication system, the amount of control information may act as overhead, so to reduce the amount of information, the configuration may be as shown in Table 2 below.

**[Table 2]**

| **Indication information** | **First panel** | **Second panel** |
|---|---|---|
| 00 | Digital port 1 | Digital ports 2, 3, 4 |
| 01 | Digital ports 1, 2 | Digital ports 3, 4 |
| 10 | Digital ports 1, 2, 3 | Digital port 4 |
| 11 | Reserved | Reserved |

The 4-bit information or 2-bit information described above may be predetermined between the base station and the UE or may be configured by specifications.

Meanwhile, when the UE provides the base station with the information on connections between digital ports and panels using the 4-bit information or 2-bit information, the method may be used not only when the number of digital ports per panel is set differently but also when the number of digital ports per panel is set the same.

In the above description, even in the case where the same number of SRS resource sets is used for each panel, information on which SRS ports (or digital ports) are used for each panel may be required. In this case, the base station may allocate an additional resource for reporting 'information on connections between panels and digital ports (or mapping configuration information between panels and digital ports)' to the UE in order to receive the information from the UE. Such a resource may be allocated as a PUCCH resource or a PUSCH resource. In another example, a separate channel for reporting the information on connections between panels and digital ports (or mapping configuration information between panels and digital ports) may be defined so that the UE uses the separate channel when reporting. Therefore, the UE may report information on panel(s) connected with digital ports (e.g. 4-bit information or 2-bit information such as in Table 2) to the base station using a PUCCH, a PUSCH, or a separate channel.

Meanwhile, as described above, allocating an additional resource by the base station to the UE for reporting 'information on connections between panels and digital ports (or mapping configuration information between panels and digital ports)' may cause overhead. Therefore, to reduce the overhead caused by allocation of the additional resource, it may be assumed that the SRS ports used by the UE are allocated starting from the lowest or the highest port of the SRS resource sets in each panel. Such an assumption may be efficient when the same number of SRS resource sets is used for connections to the digital ports of each panel. For example, whether the use or allocation starts from the lowest port or the highest port may be defined in the technical specifications, or may be preconfigured by the base station in an RRC message and indicated to the UE.

Even when the number of SRS resource sets per panel is different, the method of using or allocating starting from the lowest port or from the highest port may be applied in the same manner as described above. In other words, even when different numbers of SRS resource sets are used for the respective panels, the use or allocation may be configured to start from the lowest port or the highest port in each panel.

Meanwhile, the above example has described the case where the UE has only two panels. However, the UE may have three or four or more panels. If the UE has four or more panels, the digital port mapping method may be configured differently for even-numbered panels and odd-numbered panels. For example, in even-numbered panels, it may be predetermined to use (or allocate) starting from the lowest digital port index, and in odd-numbered panels, it may be predetermined to use (or allocate) starting from the highest digital port index. Conversely, in even-numbered panels, it may be predetermined to use (or allocate) starting from the highest digital port index, and in odd-numbered panels, it may be predetermined to use (or allocate) starting from the lowest digital port index.

In another example, in the SDM scheme with shared digital ports, the base station may not allow asymmetric configuration of SRS resource sets. In other words, the base station may not allow different numbers of SRS resource sets to be configured for the respective panels as in the forms of FIG. 11A and FIG. 11B. If asymmetric configuration of SRS resource sets is not allowed, the base station may indicate this to the UE in advance. For example, the base station may configure that asymmetric configuration of SRS resource sets is not allowed through DCI and/or higher layer signaling, for example, RRC signaling, and may transmit it to the UE.

In the case of SDM with shared digital ports, if there is no information on SRS resource sets and/or digital ports used per panel, the UE may assume that all digital ports are used for transmission in each panel. In other words, in the cases of sTRP transmission with shared or unshared digital ports and SDM transmission with unshared digital ports, the UE may assume that all digital ports in each panel are used for transmission. The UE may then perform uplink transmission through the panels.

In contrast, when the UE transmits an SRS with shared digital ports, a situation may occur in which the UE needs to activate multiple panels. Therefore, in the case of shared digital ports, it may be necessary to impose a restriction on SRS transmission. This is because, during a switching time of shared digital ports, the UE may not be able to receive/transmit any DL/UL signals. In other words, after the UE completes transmission of a UL channel through the first panel 1120 in a first resource set, a time needs to be secured to switch digital ports in order to transmit a UL channel through the second panel 1130 in a second resource set. Therefore, to secure such time, it may be necessary to impose a restriction on transmission of UL channels during the switching time of shared digital ports.

For this restriction, in the present disclosure, guard symbols of a specific length or preconfigured guard time period may be configured between UL transmissions of two SRS resource sets. During the guard symbols of a specific length or the guard time period between UL transmissions of two SRS resource sets according to the present disclosure, SRS signals may be configured not to be transmitted. In this case, information on the guard symbols or information on the guard time period may be configured per UE. Information on the guard symbols configured per UE or information on the guard time period configured per UE may be transmitted to the UE in advance through higher layer signaling.

When information on the guard symbols or the guard time period is not configured from the base station in advance, the UE may transmit only one SRS resource set. As another example of transmitting only one SRS resource set, even when information on the guard symbols or the guard time period is configured from the base station, if the length of the guard symbols or the guard time period is insufficient for switching digital ports, the UE may transmit only one SRS resource set.

As in the two examples above, when the UE transmits only part of the SRS resource sets, the UE may determine resource set(s) to be transmitted based on preconfigured information. For example, the preconfigured information may include priority information.

Meanwhile, in uplink transmission of the SDM scheme in which digital ports are shared, even if digital ports are shared, when only one resource set needs to be transmitted, the UE may transmit an SRS resource set for each panel by using the same resource set as in sTRP transmission.

As described above, under certain conditions, there may be cases in which the (maximum) number of PUSCH antenna ports used in STxMP SDM/SFN transmission and the number of PUSCH antenna ports used in sTRP transmission are different. In codebook (CB)-based PUSCH transmission, if the (maximum) number of PUSCH antenna ports in the case of sTRP transmission and the (maximum) number of PUSCH antenna ports in the case of STxMP transmission are different, different CBs may need to be defined separately for the case of sTRP transmission and for the case of STxMP transmission.

If existing CBs are reused, the base station may need to transmit to the UE information specifying different CBs separately for the case of sTRP transmission and the case of STxMP transmission, in order to define the different CBs. Information specifying different CBs separately for the case of sTRP transmission and the case of STxMP transmission may be included in and transmitted through DCI, for example. In another example, information specifying different CBs separately for the case of sTRP transmission and the case of STxMP transmission may be preconfigured and transmitted to the UE through RRC signaling.

In another example, there may be a need to define other codebooks in addition to the codebooks currently used. To reduce such a burden, the (maximum) number of PUSCH antenna ports used in the case of STxMP transmission and the (maximum) number of PUSCH antenna ports used in the case of sTRP transmission may be configured to be the same.

An example of the case in which the (maximum) number of PUSCH antenna ports used in the case of STxMP SDM/SFN transmission and the number of PUSCH antenna ports used in the case of sTRP transmission are configured to be the same is described.

When the number of panels that can be used in the UE is N, in the case of STxMP transmission, the base station and/or the UE may assume that the number of (maximum) PUSCH digital ports (e.g. A) used in the case of sTRP transmission is divided by the number of panels, and that the same number (e.g. A/N) of digital ports is used per panel. Here, as described above, the number of digital ports may correspond to the number of antenna ports.

In this case, if the (maximum) number of digital (antenna) ports for transmitting the PUSCH is not evenly divisible into A/N, the digital (antenna) ports per panel may be mapped or allocated according to the following steps.

First, digital (antenna) ports are evenly distributed to each panel by an integer part of a value obtained by dividing A by N.

The remaining antenna ports may be allocated by one of the following methods:
1) After distribution in the first step, the remaining antenna port(s) may be sequentially allocated starting from a panel having the higher panel index or starting from a panel having the lower panel index.
2) After distribution in the first step, the remaining antenna port(s) may be used only in a specific one panel. For example, the remaining antenna port(s) may be used in a panel having the highest panel index or in a panel having the lowest panel index.

Meanwhile, the present disclosure described above has been described based on sDCI-based PUSCH transmission. However, the method described above may be applied identically or similarly to mDCI-based PUSCH transmission.

In addition, the description in the present disclosure may be applied to CB-based PUSCH transmission or non-CB (NCB)-based PUSCH transmission when transmitting an uplink channel.

Furthermore, the method of configuring the (maximum) number of PUSCH antenna ports used in the case of STxMP SDM/SFN transmission and the case of sTRP transmission to be the same as described in the present disclosure may be applied differently depending on maximum rank configuration of STxMP transmission or resource set configuration of an SRS.

In addition, the (resource) information on SDM and sTRP antenna configuration according to whether digital ports are shared, as described in the present disclosure, may be specifically configured in a resource pool by the network or may be implicitly configured based on preconfigured parameters. Here, the resource pool may include, for example, at least one of a service type, priority, whether to perform a power saving operation, and (service) QoS parameters (e.g. reliability and/or latency). In addition, the network here may include at least one of a base station or a specific network function (NF) of a core network.

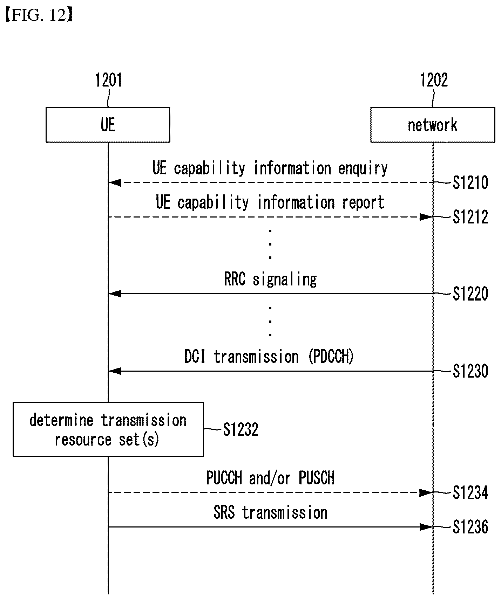

FIG. 12 is a sequence chart for describing a case in which configuration information is provided from a network to a UE having a plurality of panels with shared digital ports and SRS transmission is performed.

As shown in FIG. 12, a UE 1201 may be a terminal capable of performing the operations described in FIG. 9A, FIG. 9B, FIG. 10A, FIG. 10B, FIG. 11A, and FIG. 11B. In addition, a network 1202 may include at least one of a base station, a TRP, and/or a specific network function (NF).

The description is made on an assumption that the UE 1201 and the network 1202 are in an RRC connected state.

In step S1210, the network 1202 may transmit a UE capability information enquiry to the UE 1201. In step S1210, the UE 1201 may receive the UE capability information enquiry transmitted from the network 1202 (e.g. the base station).

In step S1212, the UE 1201 may transmit UE capability information to the network 1202 in response to the UE capability information enquiry. The UE capability information may include information such as frequency band(s) available to the UE 1201, the number of antenna ports, precoders, and switching time information. The network 1202 may receive the UE capability information from the UE 1201 in step S1212 and may store the received UE capability information in a memory. Steps S1210 and S1212 indicated by dotted lines in FIG. 12 may be optionally used. For example, step S1220 may be performed without the UE capability information. However, in the present disclosure, the description is made on the assumption that steps S1210 and S1212 are performed.

Subsequently, the UE 1201 may maintain the RRC connected state with the network 1202 or may be in one of an RRC inactive state or an RRC idle state.

In step S1220, the network 1202 may transmit RRC signaling to the UE 1201 at a specific time. The RRC signaling may be an RRC configuration message or an RRC reconfiguration message. The RRC signaling may include at least one of an SRS resource allocation rule, a usage scheme of digital ports per panel, information on whether asymmetric SRS transmission is allowed, guard symbol (or guard time period) information, and codebook information according to the present disclosure. According to an exemplary embodiment of the present disclosure, the guard symbol (or guard time period) information may be configured based on the UE capability information, if available. According to another exemplary embodiment of the present disclosure, the guard symbol (or guard time period) information may be configured regardless of the UE capability information.

Therefore, the UE 1201 may receive the RRC signaling from the network 1202 in step S1220. The UE 1201 may store the information included in the RRC signaling.

In step S1230, the network 1202 may transmit DCI to the UE 1201 through a PDCCH. The DCI may include at least part of the information described in the exemplary embodiments above. For example, the DCI may include at least one of a TPMI parameter, SRS port information, and configuration information on transmission of the STxMP SDM scheme. In step S1230, the UE 1201 may receive the DCI through the PDCCH from the network, for example, the base station.

In step S1232, the UE 1201 may determine a transmission resource set for transmitting an uplink channel based on the information included in the DCI received in step S1230 and the information included in the RRC signaling received in step S1220. When specific RRC signaling or information included in the DCI cannot be used for resource set configuration, preconfigured priority information may be additionally used.

In step S 1234, the UE 1201 may transmit configuration information of a mapping between digital ports and panels to the network 1202. In this case, the configuration information on the mapping between digital ports and panels may be transmitted using at least one of a PUCCH, a PUSCH, or a separate channel.

In step S1236, the UE 1201 may transmit an SRS through antenna ports of panels configured according to the present disclosure. In this case, the transmission scheme may be one of STxMP SDM/SFN transmission and/or sTRP transmission.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:
receiving, from a base station, a higher layer message including transmission-related information of a sounding reference signal (SRS);
receiving, from the base station, control information including an information element indicating transmission of the SRS in a simultaneous transmission across multi-panel (STxMP) spatial division multiplexing (SDM) scheme;
based on the SRS being transmitted via a plurality of panels, configuring mapping configuration information indicating a mapping between ports outputting the SRS and antenna elements included in each of the plurality of panels based on the higher layer message and the control information;
reporting the mapping configuration information to the base station; and
transmitting the SRS to the base station based on the mapping configuration information.

2. The method of claim 1, wherein the mapping configuration information includes a number of SRS resource sets of the SRS transmitted to the base station and information on a mapping between the ports outputting the SRS and the antenna elements of the panels.

3. The method of claim 1, wherein the higher layer message includes at least one of: information on resource sets of the SRS, information indicating whether asymmetric transmission of the SRS is allowed, or information on guard symbols.

4. The method of claim 3, wherein when the higher layer message allows asymmetric transmission of the SRS and a number of ports for transmitting the SRS divided by a number of the plurality of panels is not an integer, the configuring of the mapping configuration information comprises:
mapping the ports to antenna elements of the panels, respectively, so that the number of ports outputting the SRS is same for each panel; and
sequentially mapping remaining ports after the mapping to the panels based on panel index priorities.

5. The method of claim 1, wherein a number of SRS resource sets transmitted via each of the plurality of panels is same per panel.

6. The method of claim 1, further comprising:
based on the control information indicating switching of SRS transmission from a single transmission and reception point (sTRP) scheme to the STxMP SDM scheme, stopping transmission of the SRS during guard symbols based on information on the guard symbols included in the higher layer message.

7. The method of claim 1, further comprising:
based on the control information indicating switching of SRS transmission from an sTRP scheme to the STxMP SDM scheme, and the higher layer message not including information on guard symbols, stopping signal transmission in at least one resource set among SRS resource sets of the SRS, that is scheduled for transmission during a switching time of the ports.

8. The method of claim 1, wherein in the configuring of the mapping configuration information, different ports are allocated to even-numbered panels and odd-numbered panels.

9. The method of claim 1, wherein when a number of antenna ports used for transmission in the STxMP SDM scheme differs from a number of antenna ports used for sTRP transmission, codebooks used for the STxMP SDM scheme and codebooks used for the sTRP transmission are separately defined.

10. A method of a base station, comprising:
transmitting, to a user equipment (UE), a higher layer message including transmission-related information of a sounding reference signal (SRS);
transmitting, to the UE, control information including an information element indicating transmission of the SRS in a simultaneous transmission across multi-panel (STxMP) spatial division multiplexing (SDM) scheme;
receiving, from the UE, mapping configuration information indicating a mapping between ports outputting the SRS to be transmitted via a plurality of panels and antenna elements included in each of the plurality of panels; and
estimating a channel through the SRS received from the UE based on the mapping configuration information.

11. The method of claim 10, further comprising:
transmitting, to the UE, a UE capability information enquiry message;
receiving, from the UE, UE capability information in response to the UE capability information enquiry message; and
configuring the transmission-related information of the SRS based on the UE capability information.

12. The method of claim 10, wherein the mapping configuration information includes a number of SRS resource sets transmitted to the base station and information on a mapping between the ports outputting the SRS and the antenna elements of the panels.

13. The method of claim 10, wherein the higher layer message includes at least one of: information on resource sets of the SRS, information indicating whether asymmetric transmission of the SRS is allowed, or information on guard symbol(s).

14. A user equipment (UE) comprising at least one processor, wherein the at least one processor causes the UE to perform:
receiving, from a base station, a higher layer message including transmission-related information of a sounding reference signal (SRS);
receiving, from the base station, control information including an information element indicating transmission of the SRS in a simultaneous transmission across multi-panel (STxMP) spatial division multiplexing (SDM) scheme;
based on the SRS being transmitted via a plurality of panels, configuring mapping configuration information indicating a mapping between ports outputting the SRS and antenna elements included in each of the plurality of panels based on the higher layer message and the control information;
reporting the mapping configuration information to the base station; and
transmitting the SRS to the base station based on the mapping configuration information.

15. The UE of claim 14, wherein the mapping configuration information includes a number of SRS resource sets of the SRS transmitted to the base station and information on a mapping between the ports outputting the SRS and the antenna elements of the panels.

16. The UE of claim 14, wherein the higher layer message includes at least one of: information on resource sets of the SRS, information indicating whether asymmetric transmission of the SRS is allowed, or information on guard symbols.

17. The UE of claim 16, wherein when the higher layer message allows asymmetric transmission of the SRS and a number of ports for transmitting the SRS divided by a number of the plurality of panels is not an integer, in the configuring of the mapping configuration information, the at least one processor further causes the UE to perform:
mapping the ports to antenna elements of the panels, respectively, so that the number of ports outputting the SRS is same for each panel; and
sequentially mapping remaining ports after the mapping to the panels based on panel index priorities.

18. The UE of claim 14, wherein a number of SRS resource sets transmitted via each of the plurality of panels is same per panel.

19. The UE of claim 14, wherein the at least one processor further causes the UE to perform: based on the control information indicating switching of SRS transmission from a single transmission and reception point (sTRP) scheme to the STxMP SDM scheme, stopping transmission of the SRS during guard symbols based on information on the guard symbols included in the higher layer message.

20. The UE of claim 14, wherein the at least one processor further causes the UE to perform: based on the control information indicating switching of SRS transmission from an sTRP scheme to the STxMP SDM scheme, and the higher layer message not including information on guard symbols, stopping signal transmission in at least one resource set among SRS resource sets of the SRS, that is scheduled for transmission during a switching time of the ports.
